# EUROPEAN PATENT APPLICATION

(11) **EP 2 415 357 A1**
(43) Date of publication of application: **08.02.2012**
(21) Application number: 10171579.5
(22) Date of filing: 02.08.2010
(51) Int. Cl.: A23L 1/00, A23L 1/22, A23L 1/39, A23L 1/40

(54) **Food product with flavour encapsulate**

(71) Applicant: Unilever N.V., 3013 AL Rotterdam (NL)
(72) Inventor: The designation of the inventor has not yet been filed
(74) Representative: Fijnvandraat, Arnoldus

(57) **Abstract**

Food product comprising flavour encapsulates, the flavour encapsulate comprising, based on the weight of the flavour encapsulate,
- from 99 to 50 wt.% of a melt-extruded core and
- from 50 to 1 wt.% of a water-insoluble coating around the core,

wherein the core comprises, based on the weight of the core:
- from 1 wt.% to 60 wt.% of at least one flavour compound,
- from 99 wt.% to 40 wt.% of a matrix material, and

wherein the water content of the core is lower than 8 wt.%, based on the weight of the core, and
wherein the matrix material has a glass transition temperature above 20°C, and wherein the water-insoluble coating comprises, based on the weight of the coating, less than 1 0wt.% of one of the group consisting of fat, wax, and mixtures thereof, and
wherein the average particle size of the flavour encapsulate is from 200 to 5000 µm.

## Description

The present invention relates to a food product comprising a flavour encapsulate.

### Background of the invention

Despite the current focus in the market on food products that aim at a fast preparation time, for many consumers meals that require 'traditional', or relatively long cooking times remain of interest. A trend in this respect is the so-called 'slow cooking', using recipes and cooking techniques which may use a relative long cooking time to provide an optimal cooked meal. Relatively long cooking times are also found for catering applications, wherein the food is heated or kept at a warm temperature during relatively long times, such as e.g. 5 minutes to 3 hours.

Cooking processes and recipes nowadays do not rely solely on fresh ingredients or traditional dry spices. The consumer may flavour its dish during cooking by adding flavouring components, like cooking aids that provide a specific flavour and/or aroma or a mixture of desired flavours, i.e. taste and aroma components, to the dish.

A problem that may be observed in these applications is that the flavours added to the dish, provided by either traditional spices or added flavour, become available immediately or rather quickly after addition to the dish, and then quickly disappear from the dish with progression of time. This disappearing may be the result of, for example, heat-deterioration or of evaporation of aroma components from the cooking pot during the cooking process. When flavour disappears, obviously, the dish may become less attractive.

Hence, there is a need for a food product, which releases flavour during cooking and from which the flavour preferably slowly becomes available over an increased period of time during cooking or frying (so-called 'delayed' or 'extended release'), and not as a burst of flavour at the start of the cooking process or, in case the food product is a dry (e.g. concentrated) food product, immediately after addition of the food product to the dish, meat or water during cooking. Further, in case the food product is a dry food product, the food product should preferably disintegrate, preferably be dissolvable in an aqueous environment. Further, the food product should preferably provide good shelf life stability and the flavour in the food product should preferably be stable during production of the food product and storage of it.
The prior art describes some flavouring agents, which however fail to meet the objectives of the present invention, when present in a food product.

EP0852912 discloses a dry food base with encapsulated oil based flavour consisting of gum and/or lipid coating (0.05-0.5% (w/w)) around spray-dried granules which is effective for delaying the release of the flavour upon storage, but not upon cooking.

WO00/16643 discloses a flavour capsule which has a coating consisting of a modified cellulose with a reversible gel formation when the temperature is increased. Due to the reversible gel, this product may release flavour prematurely in cold water, which may not be preferred when cooking is started with cold water. Furthermore, the majority of the flavour in the product has been released shortly upon addition during cooking.

WO9818610 relates to a continuous process for producing particles with a release-rate controlled, hydrophobic component and a final moisture content of 8%. Both the encapsulants (active ingredients) and the encapsulates comprising the encapsulants may be coated. A relatively late release (with a so-called lag-time) of encapsulant that may show a 'late' burst in flavour profile may be achieved with a relatively thick coating of the particles.

US2001/0021404 discloses an encapsulate which remain largely encapsulated in aqueous medium during a heat treatment and only dissolves during a subsequent cooling phase. This encapsulate has been coated with at least one layer of a fat or wax and also a layer of modified cellulose having reversible gel formation when the temperature is increased.

Surprisingly the above mentioned problems could at least partly be solved by a food product comprising flavour encapsulates, the flavour encapsulates comprising, based on the weight of the flavour encapsulates,
- from 99 to 50 wt.% of a melt-extruded core and
- from 50 to 1 wt.% of a water-insoluble coating around the core,
wherein the core comprises, based on the weight of the core:
- from 1 wt.% to 60 wt.% of at least one flavour compound,
- from 99 wt.% to 40 wt.% of a matrix material, and
wherein the water content of the core is lower than 8 wt.%, based on the weight of the core, and
wherein the matrix material has a glass transition temperature above 20°C, and wherein the water-insoluble coating comprises, based on the weight of the coating, less than 10wt.% of one of the group consisting of fat, wax, and mixtures thereof, and wherein the average particle size of the flavour encapsulate is from 200 to 5000 micron.

The invention further relates to a method to prepare a food product of the present invention comprising the step of combining a flavour encapsulate and a food product, wherein the flavour encapsulates comprises, based on the weight of the flavour encapsulates,
- from 99 to 50 wt.% of a melt-extruded core and
- from 50 to 1 wt.% of a water-insoluble coating around the core,
wherein the core comprises, based on the weight of the core:
- from 1 wt.% to 60 wt.% of at least one flavour compound,
- from 99 wt.% to 40 wt.% of a matrix material, and
wherein the water content of the core is lower than 8 wt.%, based on the weight of the core, and
wherein the matrix material has a glass transition temperature above 20°C, and wherein the water-insoluble coating comprises, based on the weight of the coating, less than 10wt.% of one of the group consisting of fat, wax, and mixtures thereof, and wherein the average particle size of the flavour encapsulate is from 200 to 5000 micron.

The invention further relates to a method to produce a ready-to-eat food product, comprising the steps of:
- combining a concentrated food product of the present invention with at least one of the group consisting of water, meat, a dish and mixtures thereof,
- heating the combination resulting from step a) at a temperature of between 50°C and 350°C,
to obtain said ready-to-eat food product.

The invention further relates to a ready to eat food product obtainable by the method of the present invention.

### Detailed description of the invention

### Core

The food product of the present invention comprises encapsulates comprising from 99 wt.% to 50 wt.% of a melt-extruded core. Preferably the encapsulates comprise from 97 wt.% to 60 wt.%, more preferably of from 95 wt.% to 80 wt.% of a melt extruded core, based on the weight of the flavour encapsulates.
Melt extrusion can for example be performed continuously and horizontally by a twin screw extruder in which a highly viscous melt of matrix materials is forced through the extruder die plate under high pressure. The extrudate is a strand which can be broken up in pieces immediately after the die with a rotating knife or by milling after cooling. After cooling, the pieces are generally in an amorphous, glassy state. An older, batch version of this technology (also called melt injection or vertical, screwless extrusion) is based on a pressing a melt of matrix materials through one or more orifices into a cold, dehydrating solvent, commonly isopropanol. (See for example Ubbink, J., & Schoonman, A. (2003). Flavor delivery systems. In Kirk-Othmer Encyclopedia of Chemical Technology, on-line and fifth edition, volume 11. New York: Wiley-Interscience, section 2.2 and N.J. Zuidam, E. Heinrich (2010). Encapsulation of aroma, N.J. Zuidam, V. Nedović (eds.), Encapsulation Technologies for Active Food Ingredients and Food Processing, New York: Springer, sections 5.3.5 and 5.3.6 for more information about melt extrusion and melt injection processes). Melt extrusion appeared to be essential, as this results in an encapsulate with the desired flavour release profile once coated. Without willing to be bound by theory, this result might be attributed to the smooth surfaces of the melt extruded core. For example, coating of conventional spray dried granulates, with or without agglomeration, is not desired for the present invention, as encapsulates prepared using this technique show rapid release of flavour in water. Other conventional flavour encapsulation techniques like the ones using complex coacervates, microspheres, yeast cells, cyclodextrins and silica particles may also show irregular shaped surfaces upon drying, which after coating may result in comparable problems with regard to rapid flavour release. Therefore, these alternative production techniques may not meet the desired objectives of the present invention.

### Matrix materials

The melt-extruded core comprises from 99 wt.% to 40 wt.% of matrix material, preferably of from 95 wt.% to 80 wt.%, more preferably of from 90 wt.% to 70 wt.%, based on the weight of the core.

Preferably, the matrix material of the core comprises one of the group of matrix materials consisting of starches, starch derivatives, sugars, sugar derivatives, cellulose derivatives, proteins, lipids, gums, and mixtures thereof. More preferably, the matrix material of the core is selected from the group of matrix materials consisting of starches, starch derivatives, sugars, sugar derivatives, cellulose derivatives, proteins, lipids, gums, and mixtures thereof. Most preferably, the matrix material of the core comprises one of the group consisting of starches, starch derivatives, sugars and sugar derivatives and mixtures thereof.

Preferably, starch derivatives are selected from the group consisting of maltodextrins, modified starches, hydrogenated corn syrup, dextrins and mixtures thereof. More preferably, the starch derivative is a maltodextrin.

Preferably, sugars are selected from the group consisting of sucrose, glucose, lactose, fructose, maltose, ribose, dextrose, arabinose, pentose, xylose, galactose, trehalose and mixtures thereof.

Preferably, sugar derivatives are selected from the group consisting of isomalt, sorbitol, mannitol, xylitol, lactitol, malitol, pentatol and mixtures thereof.

Preferably, cellulose derivatives are selected from the group consisting of carboxymethyl cellulose (CMC), ethyl methylcellulose, hydropropyl methylcellulose (HPMC), hydroxyl ethylcellulose, hydroxy propyl cellulose, methyl cellulose, and mixtures thereof.

Preferably, gums are selected from the group consisting of plant exudates and plant extracts; algae-polysaccharides; microbial polysaccharides; and mixtures thereof. Plant exudates and plant extracts are preferably selected from the group consisting of gum arabic, gum tragacanth, gum karaya, mesquite gum, locust bean gum, tara gum, guar gum, pectin, soluble soybean polysaccharide, and mixtures thereof. Algae-polysaccharides are preferably selected from the group of carrageenan, alginate, agar-agar, and mixtures thereof. Microbial polysaccharides are preferably selected from the group consisting of xanthan gum, gellan gum, dextran, and mixtures thereof.

Preferably, proteins are selected from the group consisting of gelatine, gluten, soy protein, whey protein, casein, collagen, and mixtures thereof.

Preferably, lipids are selected from the group consisting of fats, waxes, hydrogenated vegetable oils, lipid derivatives and mixtures thereof.

The matrix material may further contain various optional ingredients such as are conventionally used in the art. These ingredients are preferably chosen from the group consisting of fillers, emulsifiers, preservatives, antioxidants, stabilizers, lubricants, and mixtures thereof. They may be each preferably present in an amount of e.g. from 0 to 10 wt.%, preferably from 1 to 5 wt.%, most preferably from 2 to 4 wt.% based on the weight of the matrix materials. Fillers may preferably include materials from the group consisting of silicon dioxide, titanium dioxide, alumina, talc, kaolin, powdered cellulose, microcrystalline cellulose, calcium phosphate, calcium sulphate, and mixtures thereof. Examples of emulsifiers include typically mono and diglycerol esters of fatty acids, polyglycerol esters, sorbitol esters, lecithin and mixtures thereof.

Preferably, these matrix materials of the core of the flavour encapsulate are present in a total amount of more than 50 wt.%, preferably of more than 70 wt.%, even more preferably more than 80 wt.%, even more preferably more than 90 wt.%, most preferably substantially 100wt.%, based on the weight of the matrix material, and can be present in an amount of from 50 to 100 wt. %, more preferably in an amount of from 70 wt.% to 95 wt.%, most preferably in an amount of from 80 wt.% to 90 wt.%, based on the weight of the matrix material.

### Hydrophilic matrix materials

Preferably, the majority of the matrix materials of the core is hydrophilic. A hydrophilic molecule or portion of a molecule is one that is typically charge-polarized and capable of hydrogen bonding. Hydrophilic material is preferably intended to mean that it is water-soluble or absorbs water and thereby preferably swells. 'Water-soluble' is preferably intended to mean that the core dissolves in water with a temperature of between 0°C and 100°C within 0 minutes and 1 hour. Coating of a preferably hydrophilic, water-soluble core with a water-insoluble coating according to the present invention results in an encapsulate that only slowly releases flavour in hot water of for example between 80°C and 100°C. This was a highly surprising and not expected effect, as the common knowledge indicates that flavour release is hard to control by coating, and that the skilled man would expect a rapid and complete loss of flavour when using a water-soluble core due to osmotic forces (See for example Ubbink, J., & Schoonman, A. (2003). Flavor delivery systems. In Kirk-Othmer Encyclopedia of Chemical Technology, on-line and fifth edition, volume 11. New York: Wiley-Interscience, p541).

Moreover, during a coating process of the core, a hydrophilic core appeared to retain the flavour much better than a hydrophobic core. For example, a hydrophobic core based on organically soluble cellulose forming a continuous phase with flavour compounds appeared to result in a flavour-loss of up to 90% during production, especially during a coating step of the encapsulate.

### Water-soluble matrix materials

Preferably, the core of the flavour encapsulate comprises a hydrophilic, water-soluble matrix material.
The core of the flavour encapsulate comprises preferably a hydrophilic, water-soluble matrix material in a total amount of more than 50 wt.%, preferably of more than 70 wt.%, even more preferably more than 80 wt.%, most preferably more than 90 wt.%, based on the weight of the matrix material, and can be present in an amount of from 50 to 100 wt.%, more preferably in an amount of from 70 to 95 wt.%, most preferably in an amount of from 80 to 90 wt.%, based on the weight of the matrix material.

Preferred hydrophilic, water soluble matrix materials that can be used as matrix materials of the core in the present invention are starch, cellulose, sucrose, glucose, lactose, fructose, maltose, ribose, dextrose, isomalt, sorbitol, mannitol, xylitol, lactitol, malitol, pentatol, arabinose, pentose, xylose, galactose, trehalose, hydrogenated corn syrup, dextran, maltodextrin, alginate, gelatine, gluten, starch, agar, xanthan gum, gelan gum, pectin, gum arabic, guar gum, mesquite gum, gum karaya, gum tragacanth, methyl cellulose, carboxymethylcellulose (CMC), hydropropyl methylcellulose (HPMC), methyl cellulose, soluble soybean polysaccharide, soy protein, whey protein, casein, collagen, gelatine, and locust bean gum, and mixtures thereof.

### Swellable material

The matrix material of the core may preferably comprise matrix material that has swelling properties, hereinafter called swellable matrix material. The swellable matrix material is preferably present in a total amount of between 1 wt.%, and 10 wt.%, more preferably of between 1 wt.% and 7 wt.% and most preferable of between 1 wt.% and 5 wt.% based on the weight of the matrix material, prior to uptake of water.. Swellable matrix materials are expected to increase the release of flavour from the encapsulate, as the volume increase of the swelling material might contribute to the opening of the coated melt extrudate. Counter-intuitively, it was surprisingly found now that when the matrix material comprises a swellable material in the presence of water, the flavour release is even further delayed in the present invention. Preferably, the swellable material may be a hydrogel. A hydrogel is a colloidal gel in which the disperse phase (colloid) is a polymer and the disperse phase has combined with water as the dispersion medium or continuous phase to produce a viscous, jellylike network which is preferably elastic. Hence, preferably, the present invention may relate to a food product, wherein the swellable matrix material of the core of the flavour encapsulate comprises at least one of the group consisting of alginate, gelatine, gluten, starch, agar, xanthan gum, gellan gum, pectin, guar gum, hydropropyl methylcellulose (HPMC), hydroxyl propyl cellulose, methyl cellulose, microcrystalline cellulose, soy protein, whey protein, casein, collagen, gelatin and mixtures thereof. These swellable matrix materials can form a hydrogel when in contact with water.

### Glassy state

For optimal flavour retention during production of the flavour encapsulate, and to provide the desired flavour release profile, the matrix material of the core is in an amorphous, glassy state, especially during the coating process, wherein the melt-extruded core is coated.

Amorphous materials exhibit at least a rubbery, viscoelastic state and a glassy, brittle state. (See Ubbink, J., & Schoonman, A. (2003), Flavor delivery systems, in Kirk-Othmer Encyclopedia of Chemical Technology, on-line and fifth edition, volume 11. New York: Wiley-Interscience, section 2.1 for more information about encapsulation in glass materials.) These two phases are separated by a so-called second-order phase transition, the glass-rubber transition, which is characterised by a so-called glass transition temperature. Below this temperature molecules may have little relative mobility similar to that of a crystalline phase. In contrast, molecules have a relatively high mobility at a temperature above the glass transition temperature when the material is in a rubbery state.

Typical glass transition temperatures of melt-extrudates used in the art are between 30°C and 70°C. Typical coating temperatures used in the art are between 20°C and 50°C. For the present invention, preferably, the matrix material of the core is in a glassy state, especially during the coating process wherein the melt-extruded core is coated. Therefore, the matrix material of the core preferably has a glass transition temperature higher than 30°C, more preferably higher than 35°C, most preferably higher than 40°C. Preferably, the glass transition temperature is lower than 70°C, preferably lower than 60°C.

It was observed that the water content of the core is preferably not too high. A too high water content results in an encapsulate wherein the flavouring is not kept in during the production process, especially not during a coating step of the production process. According to the present invention, the water content of the core is lower than 8wt.%, based on the weight of the core. Preferably, the water content is lower than 7 wt.%, more preferably the water content is lower than 6 wt.%, most preferably the water content is lower than 5 wt.%. Preferably, the water content is between 0.5 and 8 wt.%, more preferably between 1 and 6 wt.%, most preferably between 2 and 4 wt.%.

### Flavour compound

The core of the flavour encapsulate comprises from 1 wt.% to 60 wt.% of at least one flavour compound. Preferably, the core comprises from 2 wt.% to 30 wt.%, more preferably from 5 wt.% to 15 wt.% of at least one flavour compound. Flavour compounds may be any type of flavour as used in the food industry. Preferably, the flavour is one of the group consisting of garlic, basil, onion, parsley, fruit flavour and mixtures thereof. Flavour compounds traditionally show a relatively fast evaporation or deterioration during cooking of a food product, and the present invention provides a manner to keep these flavours available for an extended and delayed time during cooking.

### Coating

The flavour encapsulate which is present in the food product of the present invention comprises 1 to 50% of a coating. Surprisingly, coating of a, preferably, hydrophilic core with a water-insoluble coating according to the present invention results in an encapsulate that releases flavour compounds in a gradual and delayed manner in hot water of for example between 80°C and 100°C.
The encapsulate comprises a coating, which may be applied to the melt-extruded core by e.g. fluid bed coating, drum coating or pan coating, using for example a solvent solution, like an ethanol solution, comprising the coating material. The coating can be applied by for example using an Aeromatic-Fielder multiprocessor MP1 fluid bed from GEA Pharma Systems or suitable Wurster type fluid bed equipment. The encapsulate comprises from 50 wt.% to 1 wt.% of a water-insoluble coating around the core. Water-insoluble is preferably intended to mean that the coating does not dissolve within 30 minutes to 3 hours in aqueous solutions of 0°C to 100°C. Preferably, the amount of water-insoluble coating is from 2 wt.% to 35 wt.%, more preferably from 4 wt.% to 30 wt.%, most preferably from 5 wt.% to 15 wt.%, based on the weight of the total flavour encapsulate.

The coating preferably has a thickness of between 3 µm to 100 µm. The thickness should be construed as the thickness over substantially the entire surface of the core. At a smaller thickness the coating may break, which may result in a premature bursting release of the flavouring compound. Preferably, at least 80% of the flavour encapsulates has an absolute thickness of the coating of between 3 µm and 100 µm, most preferably of between 10 µm to 60 µm, most preferably of between 15 µm and 50 µm. The idea of the present invention is that the flavour compounds from the encapsulate are not released at once (no 'burst release'), but that the flavour compounds are released in a gradual, delayed manner ('delayed' or 'extended release'). Without willing to be bound by theory, this effect may preferably, be reached via small pores in the coating that are formed when the product of the present invention is in contact with a hot, aqueous solution above 50°C. A too high thickness of the coating may result in a situation that no flavour compound is released through the coating. Preferably, at least 80% of the flavour encapsulates has a coating with an average thickness of between 3 and 80 µm. Preferably the coating has an average thickness of more than 3 µm, more preferably more than 5 µm, even more preferably more than 10 µm, and preferably less than 60 µm, more preferably less than 50 µm, more preferably less than 40 µm. Preferably, e.g. in case the core comprises swelling material, the thickness may preferably be between 3 and 10 µm. Preferably, e.g. in case the core comprises non-swelling material, the thickness may preferably be between 10 and 30 µm. Preferred ranges may for example be from 3 µm to 60 µm, more preferably from 5 µm to 30 µm, even more preferably from 10 µm to 80 µm or from 10 µm to 40 µm, most preferably from 30 µm to 50 µm.

The water-insoluble coating is preferably shape-stable when in contact with aqueous material, even when the flavour material has leaked out of the flavour encapsulate. The coating material is therefore preferably not in the form of a gel or forms a gel when in contact with an aqueous solution. The coating material is preferably not in the form of a gel, a reversible gel or gelling material or forms a gel, a reversible gel or gelling material when in contact with an aqueous solution of from 0°C to 100°C, as this type of coating may not provide the desired flavour release profile. A gel can be a stable network with water as the continuous phase and which is elastic, viscous and shape stable against stresses. A reversible gel is intended to mean here a gel that might be unstable or dissolve at other conditions, for example, a reversible gel can be formed in water at boiling conditions but may dissolve upon cooling.

The water-insoluble coating is preferably not a fat-based coating. Fats or waxes are believed not to provide the flavour release profile as preferably aimed for by the present invention. In addition, it was observed that a fat-based coating may increase leakage of flavour from the core into the fat-based coating, in this way compromising the desired release profile. Hence the amount of fat and/or waxes is preferably as low as possible. The coating of the encapsulate as used in the present invention comprises lower than 10 wt.% of one of the group consisting of fat, wax, and mixtures thereof. More preferably the amount of fat and/or wax is lower than 5 wt.%, even more preferably, lower than 2 wt.% based on the weight of the coating, most preferably the coating of the encapsulate is substantially free from fat and/or wax. The amount of fat can be from 0 wt.% to 10 wt.%, preferably from 0.1 wt.% to 5 wt.%, more preferably of from 0.5 wt.% to 2 wt.%, based on the weight of the coating. In the present context, 'fat' is intended to mean any mono, di- or triglyceride that can be used as at least part of a coating of a flavour encapsulate, and may comprise for example at least one of the group consisting of fatty acids, fatty alcohols, glycerides, phospholids and mixtures thereof. 'Wax' is intended to mean here any fatty acid esters of higher primary monovalent alcohols than glycerol that can be used as at least part of a coating of a flavour encapsulate, and may comprise for example at least one of the group consisting of beeswax, carnaubawax, candillia wax, and mixtures thereof.

The coating of the encapsulate preferably is dissolvable in a solvent, such as for example an organic or aqueous organic solvent, to facilitate the coating preparation. Preferred organic solvents are from the group consisting of methanol, ethanol, isopropanol and mixtures thereof. Another preferred option to enable the coating process is the use of coating material dispersed in water.

Preferably, the material of the coating comprises one of the group consisting of modified cellulose, zein, shellac and mixtures thereof. Preferred are modified celluloses from the group consisting of ethyl cellulose, hydroxypropylmethylcellulose (HPMC) and mixtures thereof. These coating materials provide an encapsulate with optimal flavour release profiles for the present invention. Most preferably, the coating comprises ethyl cellulose. Preferably, these coating materials are present in a total amount of at least 50 wt.%, more preferably more than 90 wt.%, even more preferably more than 95 wt.%, based on the weight of the coating, and can be preferably present in an amount of between 50 wt.% and 100 wt.%, preferably of between 70 wt.% and 95 wt.%, based on the weight of the coating. Most preferably, substantially all of the water-insoluble coating comprises of one of the group consisting of, modified cellulose, (preferably ethyl cellulose, hydroxypropylmethylcellulose (HPMC) or mixtures thereof), zein, shellac and mixtures thereof. Most preferably, the coating comprises of 100 wt.% ethyl cellulose, based on the weight of the coating.

Preferably the coating as described is the only coating, i.e. the invention relates to a food product comprising flavour encapsulates, which flavour encapsulate comprises one coating. Additional coatings will make the production process more complex and may compromise the desired flavour release profile of the present invention.

The average particle size of the flavour encapsulate is from 200 µm to 5000 µm. Preferably, the size is from 300 µm to 2500 µm, preferably of from 400 µm to 2000 micron, more preferably of from 500 µm to 1500 µm. The size of the encapsulate is relevant, as a too high size may result in relatively low surface area and thus relatively high coating thickness, whereas a too small size may result in relatively large surface area and thus relatively low coating thickness.

### Food product

The present invention relates to a food product comprising flavour encapsulates. The flavour encapsulates are preferably present in an amount of from 0.0005 wt.% to 5 wt.%, more preferably in an amount of from 0.05 wt.% to 1 wt.%, most preferably in an amount of from 0.01 to 0.5 wt.%, based on the weight of the food product.

Preferred food products according to the present invention are a concentrate for a bouillon, a concentrate for a soup or a concentrate for a gravy, a bouillon cube, a bouillon tablet, a bouillon granule, a bouillon, a soup, a sauce, a gravy, an instant meal, rice, beans, a frozen food, confectionary, a marinade, a beverage, an instant beverage, tea in tea bags, tea derived products, a seasoning, a ready-to-use meal, an instant meal, or a meal solution. 'Ready-to-use' or 'instant' meal or beverage is intended to mean here a pre-packed meal or beverage which can be cooked immediately with little or no further preparation (e.g. some oil or water might be added). 'Meal solutions' are a pre-packed meal kit which consumers can use in combination with added meat and/or vegetable to cook a meal, often for 2-4 persons. In case of the food product is rice or beans, it is intended that the rice or beans are mixed with encapsulated flavours. During preparation of the rice or beans or the instant meal, for example by cooking, the flavours are gradually released during the preparation process.

Preferably, the food product of the present invention is a dry food product. 'Dry' is preferably intended to mean here having a water content of lower than 10 wt.%. Preferably, the present invention relates to a food product wherein the water content is lower than 8 wt.%, more preferably lower than 6 wt.%, most preferably, lower than 4 wt.%. Preferably the water content is higher than 0.5 wt.%, more preferably higher than 1 wt.%, most preferably higher than 3 wt.%. The water content hence is preferably between 0.5 wt.% and 8 wt.%, more preferably between 1 wt.% and 6wt.%, most preferably of between 3 wt.% and 4 wt.%. Preferably, the food product is a dry food product selected from the group consisting of a concentrate for a bouillon, a concentrate for a soup or a concentrate for a gravy, a bouillon cube, a bouillon tablet, a bouillon granule, an instant meal, rice, beans, a frozen food, confectionary, a marinade, an instant beverage, tea in tea bags, tea derived products, a seasoning, a ready-to-use meal, an instant meal and a meal solution.

Other additionally preferred food products are liquid food products. A liquid food product may be for example oil-based (i.e. no or hardly any water is present) or water-based. The food product may preferably be pourable. Preferably, the liquid food product is selected from the group of liquid food products consisting of a liquid concentrate for a bouillon, a liquid concentrate for a soup, a liquid concentrate for a gravy, a bouillon, a soup, a sauce, a gravy, an instant meal, a marinade, a beverage, tea derived products, a liquid seasoning, a ready-to-use meal, and a meal solution.

Furthermore, the food product may preferably have the form of a paste or preferably of a gel, preferably of a shape-stable, elastic gel. In case of a liquid food product, a paste or a gel, the flavour encapsulates are preferably dispersed in the food product. In case of a water-based food product, the flavour encapsulates should preferably not be heated above 50°C during production and storage prior to use by the consumer. A water based food product is intended to have a water content of or higher than 10 wt.%, and may need to be pasteurised or sterilised to ensure microbiological safety. In case of such a heat treatment, flavour encapsulates need to be added to the food product after such a heat treatment step in the food production process to avoid damage prior to use by the consumer (for example premature release of the flavour).

Preferably, the food product is a concentrated food product. Such a concentrated food product requires dilution in an aqueous liquid or a dish or meat to result in a ready-to-eat food product for consumption. A preferred concentrated food product is a beverage concentrate. More preferably, the food product of the present invention is one of the group of concentrated food products consisting of a bouillon concentrate, a bouillon cube, a bouillon tablet, a soup concentrate, a sauce concentrate, a gravy concentrate, and a seasoning particle. Most preferably, the food product is a pasty bouillon cube, such as a bouillon cube produced by extrusion of a bouillon mass by a machine of e.g. Corazza. These products may be added to dishes that require relatively long cooking times.

During preparation of the food product, preferably of a dry food product such as for example a bouillon cube, the flavour encapsulates may be mixed with other ingredients of the food product of the invention. Following mixing, a shaping step may be present to result in the food product with a final shape. Shaping may be done by pressing or extrusion of the mixture of ingredients which includes the flavour incapsulates. After or during the shaping step, the food product might be packaged. Alternatively, the mixture of ingredients may be packaged in absence of a shaping step. Another preferred food product is a dry, instant beverage mixture, for example a tea in a tea bag. The food product is preferably a packaged food product.

In a further aspect, the present invention relates to a method to produce a ready-to-eat food product, comprising the steps of:
a) combining a concentrated food product of the present invention with at least one of the group consisting of water, meat, a dish and mixtures thereof,
b) heating the combination resulting from step a) at a temperature of between 50°C and 350°C,
to obtain said ready-to-eat food product.

Preferably, the heating temperature is of between 70°C and 300°C, more preferably of between 80°C and 275°C, most preferably of between 100°C and 150°C. Preferably, the ready-to-eat food product is a bouillon, a soup, a gravy, a beverage, or a seasoned dish, and the method preferably comprises heating the combination resulting from step a) at a temperature of between 50°C and 100°C, preferably of between 70°C and 100°C, most preferably of between 80°C and 100°C. In another preferred situation, the ready-to-eat food product may be for example a seasoned meat, and preferably, may comprise the step of combining a seasoning or marinate with meat followed by frying or baking. The method preferably comprises the step of heating the combination resulting from step a) at a temperature of between 50°C and 350°C, preferably of between 100°C and 300°C, most preferably of between 150°C and 275°C.

The invention further relates to a ready-to-eat food product, obtainable by the method of the present invention. Such a ready-to-eat food product may preferably be a bouillon, a soup, a sauce, a gravy, a seasoned meal, a seasoned meat, a seasoned rice, seasoned beans, a tea, or a beverage. The amount of flavour encapsulates in the food product according to the invention is preferably of between 0.0005 and 5 wt.%, more preferably of between 0.05 and 1 wt.%, most preferably of between 0.01 and 0.5 wt.%, based on the weight of the ready to eat food product.

The invention further relates to the use of a flavour encapsulate for providing a delayed flavour release or extended flavour release during preparation and/or consumption of a food product, wherein the flavour encapsulate comprises, based on the weight of the flavour encapsulate,
- from 99 to 50 wt.% of a melt-extruded core and
- from 50 to 1 wt.% of a water-insoluble coating around the core,
wherein the core comprises, based on the weight of the core:
- from 1 wt.% to 60 wt.% of at least one flavour compound,
- from 99 wt.% to 40 wt.% of a matrix material, and
wherein the water content of the core is lower than 8 wt.%, based on the weight of the core, and
wherein the matrix material has a glass transition temperature above 20°C, and wherein the water-insoluble coating comprises, based on the weight of the coating, less than 10wt.% of one of the group consisting of fat, wax, and mixtures thereof, and
wherein the average particle size of the flavour encapsulate is from 200 to 5000 µm.

Preferred ingredients and amounts thereof used in the flavouring encapsulate are described above for the food product comprising the flavouring encapsulates, and apply equally to the flavouring encapsulate when used for providing a delayed flavour release or extended flavour release.

The idea of the present invention relates to a food product comprising flavour encapsulates from which the flavour compounds from the encapsulate are not released at once (no 'burst release'). Preferably, the flavour is released gradually and is in balance with the evaporation of flavour from the cooking pot or from the dish when served, in this way providing a flavoured dish for an extended time period. Hence, according to the present invention, preferably less than 50 wt.% of the flavour is released in less than 3 minutes, preferably in less than 5 minutes, more preferably in less than 10 minutes at 80°C to 100°C in water. The flavour compounds are released in a gradual, delayed manner ('delayed' or 'extended release'). Preferably, more than 90% of the flavour is released after 3 hours, more preferably after 1 hour, most preferably after 30 minutes at 80°C to 100°C in water. Another advantage of this invention that was observed was an enhanced storage stability of the flavour compounds in the food product upon storage.

The invention will now be illustrated in the following, non-limiting examples.

### Examples

### Example 1. Production of flavour encapsulates and flavour release in water or model broth

### Production of melt-extruded cores containing water-soluble matrix materials and different flavours

Matrix materials according to Table 1 were dry blended and then fed into a first zone of a twin screw extruder. Extrusion conditions used are described in US 2007/0184163. The melt extrudates core A, core B and core C are commercially available under the trade name CapLock™ Garlic, CapLock™ Basil and CapLock™ Parsley from International Flavors & Fragrances Inc. (New York, New York), respectively.

**Table 1: Composition of water-soluble cores.**

| | Core A | Core B | Core C |
|---|---|---|---|
| **Flavour** | | | |
| Garlic flavour | 5 | 0 | 0 |
| Basil flavour | 0 | 5 | 0 |
| Parsley flavour | 0 | 0 | 5 |

| **Matrix material** | | | |
|---|---|---|---|
| Saccharides | 50 | 50 | 50 |
| Maltodextrin | 40 | 40 | 40 |
| Emulsifiers | 2.5 | 2.5 | 2.5 |
| Silicon dioxide | 2.5 | 2.5 | 2.5 |

### Production of a melt-extruded core containing a swellable material

Matrix materials according to Table 2 were dry blended and then fed into the first zone of a twin screw extruder. Extrusion conditions used are described in US 2007/0184163. This core D is also commercially available as CapLock™ HM Basil from International Flavors & Fragrances Inc. (New York, New York).

**Table 2: Composition of water-swellable core.**

| | Core D |
|---|---|
| **Flavours** | |
| Basil flavour | 5 |

| **Matrix materials** | |
|---|---|
| Maltodextrin | 45 |
| Saccharides | 40 |
| Hydroxypropylcellulose | 2.5 |
| Emulsifiers | 2.5 |
| Silicon dioxide | 2.5 |

### Production of coated melt extrudates

Encapsulates A, B, C, and D were made by coating of melt-extruded cores A, B, C and D (made as described above) via a fluid bed coating method using an ethanol solution containing 10 wt.% ethyl cellulose. The final amount of ethyl cellulose coating was 15 wt.%, based on the weight of the encapsulate. The flavour retention upon coating was in general more than 94% (w/w) of the original amount.

### Comparative example. Production of coated spray-dried flavour granulates

Pre-granulates were made by mixing 100 g of spray-dried basil flavour powder with 20 g of 5% HPMC + 2% glycerol in water for 10 s in a high shear mixer (Philips Cucina food processor). This was repeated eight times. All fractions were collected and added into an Aeromatic-Fielder™ Multiprocessor MP1 fluid bed from GEA Pharma Systems Ltd. Then an aqueous solution of 9% Methocel E5 + 4% glycerol was sprayed onto the pre-granulated powder as a binder solution at a product temperature of 40°C. The final Methocel E5 amount was 5% (w/w) and the obtained granulates were sieved into a 200-710 µm fraction to obtain spray-dried core E. Ethyl cellulose coating of this core E was performed by fluid bed coating using an ethanol solution of 10 wt.% ethyl cellulose, resulting in encapsulate E. The final amount of ethyl cellulose coating was 15 wt.%, based on the weight of the encapsulate Flavour release from encapsulates A, B, D and E in water or model broth

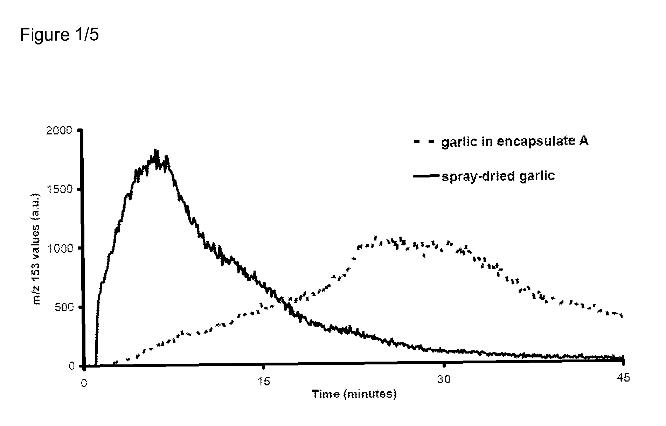

Flavour release of the encapsulates A, B, D, and E in water or model broth at 80°C into the headspace was measured real-time by PTR-MS (Proton Transfer Reaction - Mass Spectrometry). The PTR-MS equipment used was a so-called High-Sensitivity PTR-MS from Ionicon Analytik Innsbruck, Austria. The composition of the model broth was 5 g of sodium chloride, 1.5 g of monosodium glutamate monohydrate, 1.5 g of starch (Colflu 67), 0.2 g of fat (medium chain triglycerides). The first minute of PTR-MS measurement recorded the base line without sample, and after 1 minute the sample was introduced in the water or model broth. A typical sample weight was approximately 20 mg of spray-dried flavour, and this was added into 100 ml of water or model broth at 80°C. To compare equal flavour loads the sample weights of the different encapsulates were increased compared to their core to correct for their coating weights and plotted against the same flavour amount. The PTR-MS measurements lasted for at least 30 minutes and recorded ion traces of the molecular weight of a flavour component + 1 (from the proton) and its major fragment ions as m/z values (mass divided by charge). The flavour release data are shown in figures 1, 2, 3, 4 and 5. Only one m/z profile is shown here for simplification reasons. Other m/z profiles from the same sample, representing the other flavour compounds in that sample, showed a very similar release, and no clear effect of differences in chemical and physical characteristics of the flavour compounds used could be found. This indicates that the release was not related to the hydrophobicity or molecular weight of the flavour compound.

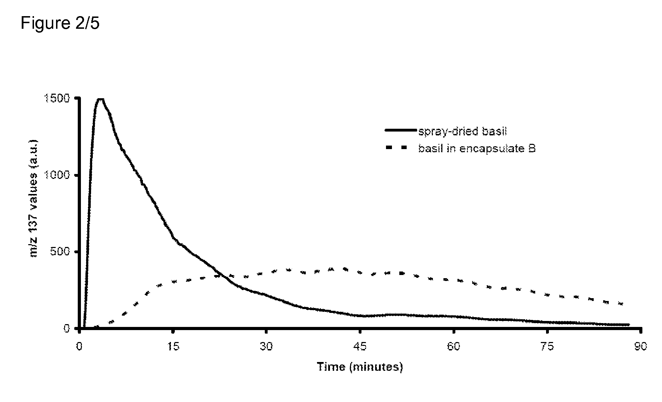

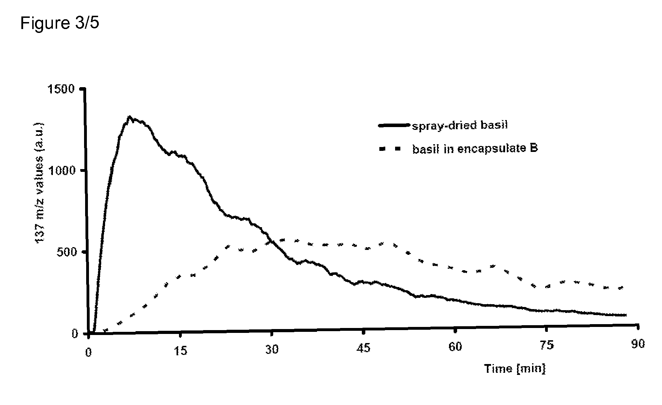

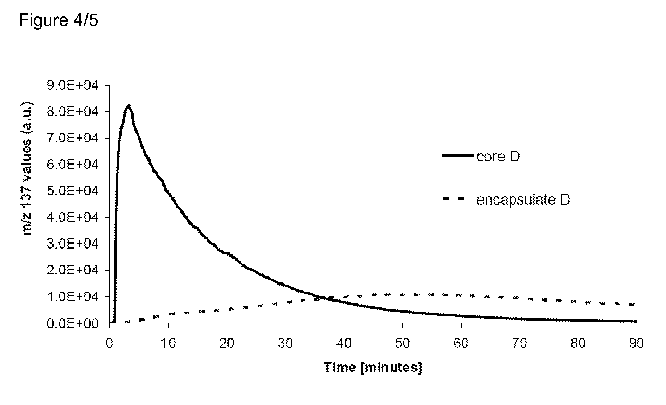

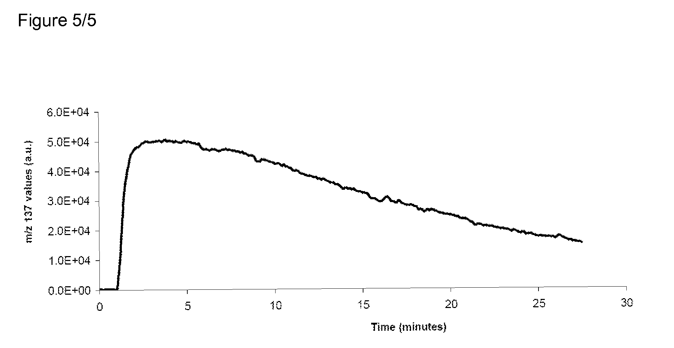

Figure 1 shows that garlic flavour had a delayed release out of encapsulate A in model broth at 80°C, in contrast to the burst release when using spray-dried garlic flavour. The same was found when using basil flavour in water at 80°C (see Figure 2).When a model broth was used instead of water, the releases of the basil flavour compounds into the headspace as measured by PTR-MS showed a similar pattern (compare Figure 3 with Figure 2). As in Figure 2, the basil flavour compounds showed a delayed release out of encapsulate B in model broth at 80°C, in contrast to the burst release when using spray-dried basil. The release of basil flavour from melt extrudates with swellable material (core D) in water at 80°C showed a very similar, burst release as spray-dried basil (compare Figure 4 with Figure 2). However, the release of basil flavour from coated melt extrudate with swellable material (encapsulate D) was very slow compared to melt extrudates with non-swellable material (compare Figure 4 with Figure 2). The flavour release from coated spray-dried granulates (comparative example, encapsulate E) in water at 80°C was a burst one, see Figure 5. This release pattern is very close to the one of spray-dried flavour and completely different than the release from coated melt extrudates (compare

Figure 5 with Figures 1-4; please note the shorter time axis of Figure 5 compared to the other Figures).

### Example 2. Preparation and panel evaluation of a food product with encapsulates A, B or C

Garlic, basil or parsley flavour in coated melt extrudates (encapsulates A, B and C, respectively, from Example 1) or the same flavour in spray-dried form were added to dry food product with pasta and dry tomato sauce (Spaghetteria Napoli, pasta in tomatosauce from Knorr, Unilever Bestfoods, Hamburg, Germany; contains 71 % pasta, tomato powder, sugar, salt, starch, vegetable oil, monosodium glutamate, herbs, onion, acid, citric acid and pepper). The meal was prepared according to the instructions on the pack. The product was mixed in cold water and brought to boil for 10 minutes. The total time from start of cooking in water (for 10 minutes) and serving was about 40 minutes. The flavour dose in the final meal is presented in Table 3. The results of the panel evaluation of the meal are also given in Table 3. Panel evaluation was performed using a logarithmic scoring scale from 0 (no sensation) to 100 (strongest imaginable). Weak and moderate scores are between 6.1 and 17.2, respectively. (Most products on the market are below moderate.)

**Table 3: Dose and panel evaluation of garlic, basil and parsley flavour in food product.**

| Flavour encapsulate | Dose in final meal (ppm) | Aroma score | Flavour score |
|---|---|---|---|
| encapsulate A (garlic in coated melt extrudates) | 15 | 9.8 | 12.5 |
| Garlic spray-dried | 30 | 6.7 | 10.7 |
| Encapsulate B (basil in coated melt extrudate) | 30 | 11.1 | 13.1 |
| Spray-dried basil | 30 | 6.0 | 8.7 |
| encapsulate C (parsley in coated melt extrudate) | 12 | 7.6 | 9.4 |
| Spray-dried parsley | 12 | 3.9 | 5.1 |

Trained panel evaluation of the use of encapsulate A (garlic flavour in coated melt extrudate) in Pasta Napoli upon boiling showed that the perceived aroma (by nose) and flavour (upon eating by tongue and nose) is much higher when using coated melt extrudates than when using conventional, spray-dried flavour. This is remarkable since the amount of garlic flavour used in the spray-dried form was two times higher than the amount used in encapsulate A. Apparently, when using spray-dried flavour, most of the flavour had been evaporated after 40 minutes, whereas with the coated melt-extruded flavour encapsulates the flavours were still released.

A similar result was obtained with basil and parsley flavour (see Table 3). The aroma and flavour perceptions when using basil or parsley flavour in encapsulate B or C, respectively, was perceived more intense than when using spray-dried flavour at equal flavour dose.

### Example 3. Preparation and panel evaluation upon boiling of rice with basil in coated melt extrudates

Rice was dry mixed with either encapsulate A or B (garlic or basil flavour in coated melt extrudates), or with one of the same flavours in spray-dried form. The flavoured rice product was added to boiling water and cooked for 10 minutes. The total time from start of cooking in water and serving was about 40 minutes. The flavour doses used and the results of the panel evaluations of the cooked rice with garlic or basil flavour are given in Table 4. The aroma perception when using encapsulate A was similar to the one of spray-dried garlic, although the latter flavour dose was three times higher than when using encapsulate A. The flavour perception was even more intense under these conditions when using coated melt extrudates than when using spray-dried flavour. The aroma and flavour perceptions when using basil flavour in coated melt extrudates (encapsulate B) was perceived more intense than when using spray-dried basil flavour, even when this latter was dosed two times more than when using coated melt extrudates. Interestingly, the coating of granules made from spray-dried basil flavour (Encapsulate E, a comparative example) did result in statistically not different aroma and flavour perception as spray-dried basil, indicating that the core properties is an important aspect of the present invention. Not only the water-insoluble coating but also the melt extruded core is an essential and surprising combined aspect.

**Table 4: Flavour doses and panel evaluations upon boiling of garlic or basil flavoured rice product.**

| Flavour encapsulate | Dose in final meal (ppm) | Aroma score | Flavour score |
|---|---|---|---|
| encapsulate A (Garlic in coated melt extrudates) | 3.3 | 10.0 | 11.4 |
| Garlic spray-dried | 10 | 10.0 | 9.9 |
| encapsulate B (Basil in coated melt extrudates) | 6 | 10.2 | 12.2 |
| Basil spray-dried | 6 | 7.0 | 7.8 |
| Basil spray-dried | 12 | 9.3 | 10.6 |
| Encapsulates E (Basil in coated spray-dried granules) | 6 | 7.5 | 8.6 |

### Legend figures

Figure 1:
   Release of methyl allyl trisulfide from encapsulate A and from spray-dried form in model broth at 80°C as measured by PTR-MS. The absolute counts shown here are the so-called m/z 153 absolute intensities, representing methyl allyl trisulfide. Other flavour components of the garlic flavour had a similar release pattern from encapsulate A or spray-dried garlic. Upon addition of spray-dried flavours to model broth at 1 minute, the release of flavour from spray-dried encapsulates is a burst and complete one, and its maximum via the water phase into the headspace is measured at about 4-5 minutes. This indicates that all spray-dried flavour is then fully dissolved. Afterwards, the flavour amount in the headspace is decreased rapidly due to evaporation from the water phase. In contrast, the flavour release from the melt extruded encapsulate A after addition to model broth at 1 minute into the headspace was slow and reached a maximum at about 25 minutes. Afterwards, the flavour continued to leak slowly from encapsulates into the water phase and then into the headspace, which is indicated by the fact that the flavour decay was not so fast as obtained with fully dissolved spray-dried flavours. The amount of flavour coming from the encapsulates and the amount of flavour disappearing into the headspace was almost in balance here.
Figure 2:
   Release of terpenes from encapsulate B or from spray-dried form in water at 80°C as measured by PTR-MS. The absolute counts shown here are the so-called m/z 137 absolute intensities, representing the terpenes components of the basil flavour. Other basil flavour components had a similar release pattern from same encapsulate B or spray-dried basil. See the legend of Figure 1 for detailed explanation of the flavour release curves.
Figure 3:
   Release of terpenes from encapsulate B or from spray-dried form in model broth at 80°C as measured by PTR-MS. The absolute counts shown here are the so-called m/z 137 absolute intensities, representing the terpenes components of the basil flavour. Other basil flavour components had a similar release pattern from same encapsulate B or spray-dried basil. See the legend of Figure 1 for detailed explanation of the flavour release curves.
Figure 4:
   Release of terpenes from core D (non-coated) or encapsulate D in water at 80°C as measured by PTR-MS. The absolute counts shown here are the so-called m/z 137 absolute intensity, representing the terpenes components of the basil flavour. Other basil flavour components had a similar release pattern from encapsulate D or spray-dried basil. See the legend of Figure 1 for detailed explanation of the flavour release curves.
Figure 5:
   Release of terpenes from basil flavour from encapsulate E in water at 80°C as measured by PTR-MS. The absolute counts shown here are the so-called m/z 137 absolute intensity, representing the terpenes components of the basil flavour. Other basil flavour components had a similar release pattern from encapsulate E. Upon addition of encapsulate E to water at 1 minute, the release of flavour is a burst and complete one, and its maximum via the water phase into the headspace is measured at about 3-4 minutes. This indicates that all spray-dried flavour is then fully dissolved. Afterwards, the flavour amount in the headspace is decreased rapidly due to evaporation from the water phase at a very similar speed as the spray-dried flavours (see also Figures 1-4).

## Claims

1. Food product comprising flavour encapsulates, the flavour encapsulate comprising, based on the weight of the flavour encapsulate,
- from 99 to 50 wt.% of a melt-extruded core and
- from 50 to 1 wt.% of a water-insoluble coating around the core,
wherein the core comprises, based on the weight of the core:
- from 1 wt.% to 60 wt.% of at least one flavour compound,
- from 99 wt.% to 40 wt.% of a matrix material, and
wherein the water content of the core is lower than 8 wt.%, based on the weight of the core, and
wherein the matrix material has a glass transition temperature above 20°C, and wherein the water-insoluble coating comprises, based on the weight of the coating, less than 1 0wt.% of one of the group consisting of fat, wax, and mixtures thereof, and
wherein the average particle size of the flavour encapsulate is from 200 to 5000 µm.

2. Food product according to claim 1, wherein the matrix material comprises one of the group consisting of starches, starch derivatives, sugars, sugar derivatives, cellulose derivatives, proteins, lipids, gums, and mixtures thereof.

3. Food product according to claim 1, wherein the core comprises a water-soluble matrix material.

4. Food product according to any one of the preceding claims, wherein the matrix material of the core comprises a swellable matrix material.

5. Food product according to claim 4, wherein the swellable matrix material is one of the group consisting of alginate, gelatine, gluten, starch, agar, xantham gum, gellan gum, pectin, guar gum, hydropropyl methylcellulose (HPMC), hydroxy propyl cellulose, methyl cellulose, microcrystalline cellulose, soy protein, whey protein, casein, collagen, gelatin and mixtures thereof.

6. Food product according to any one of the preceding claims, wherein the coating comprises one of the group consisting of, modified cellulose, zein, shellac and mixtures thereof.

7. Food product according to any one of the preceding claims, wherein the coating comprises ethyl cellulose.

8. Food product according to any one of the preceding claims, wherein at least 80 wt.% of the flavour encapsulates has a coating with an average thickness of between 10 µm and 80 µm.

9. Food product according to any one of the preceding claims, wherein the flavour encapsulates are present in an amount of from 0.0005 wt.% to 5 wt.%, based on the weight of the food product.

10. Food product according to any one of the preceding claims, wherein the food product is a dry food product.

11. Food product according to any one of claims 1 to 9, wherein the food product is a liquid food product.

12. Food product according to any one of the preceding claims, wherein the food product is a concentrated food product.

13. Food product according to claim 12, wherein the food product is selected from the group consisting of a bouillon concentrate, a bouillon cube, a bouillon tablet, a soup concentrate, a sauce concentrate, a gravy concentrate and a seasoning particle.

14. Method to prepare a food product according to any one of claims 1 to 13, comprising the step of mixing a flavour encapsulate and a food product, wherein the flavour encapsulate comprises, based on the weight of the flavour encapsulate,
- from 99 to 50 wt.% of a melt-extruded core and
- from 50 to 1 wt.% of a water-insoluble coating around the core,
wherein the core comprises, based on the weight of the core:
- from 1 wt.% to 60 wt.% of at least one flavour compound,
- from 99 wt.% to 40 wt.% of a matrix material, and
wherein the water content of the core is lower than 8 wt.%, based on the weight of the core, and
wherein the matrix material has a glass transition temperature above 20°C, and wherein the water-insoluble coating comprises, based on the weight of the coating, less than 10wt.% of one of the group consisting of fat, wax, and mixtures thereof, and
wherein the average particle size of the flavour encapsulate is from 200 to 5000 µm.

15. Method to produce a ready-to-eat food product, comprising the steps of:
a. combining a concentrated food product according to claim 12 or 13 with at least one of the group consisting of water, meat, a dish and mixtures thereof,
b. heating the combination resulting from step a) at a temperature of between 50°C and 350°C,
to obtain said ready-to-eat food product.

16. Ready-to-eat food product obtainable by the method of claim 15.

17. Use of a flavour encapsulate for providing a delayed flavour release or extended flavour release during preparation and/or consumption of a food product, wherein the flavour encapsulate comprises, based on the weight of the flavour encapsulate,
- from 99 to 50 wt.% of a melt-extruded core and
- from 50 to 1 wt.% of a water-insoluble coating around the core,
wherein the core comprises, based on the weight of the core:
- from 1 wt.% to 60 wt.% of at least one flavour compound,
- from 99 wt.% to 40 wt.% of a matrix material, and
wherein the water content of the core is lower than 8 wt.%, based on the weight of the core, and
wherein the matrix material has a glass transition temperature above 20°C, and wherein the water-insoluble coating comprises, based on the weight of the coating, less than 10wt.% of one of the group consisting of fat, wax, and mixtures thereof, and
wherein the average particle size of the flavour encapsulate is from 200 to 5000 µm.
